**Europäisches Patentamt**

**European Patent Office**

**Office européen des brevets**

(19)

(11) Veröffentlichungsnummer: **0 342 257 B1**

(12) **EUROPÄISCHE PATENTSCHRIFT**

(45) Veröffentlichungstag der Patentschrift: **08.07.92**

(51) Int. Cl.⁵: **B23Q 3/157**

(21) Anmeldenummer: **88108018.8**

(22) Anmeldetag: **19.05.88**

(54) **Werkzeugmaschine mit Magazin und Werkzeugwechsler.**

(43) Veröffentlichungstag der Anmeldung:
**23.11.89 Patentblatt 89/47**

(45) Bekanntmachung des Hinweises auf die Patenterteilung:
**08.07.92 Patentblatt 92/28**

(84) Benannte Vertragsstaaten:
**AT BE CH DE ES FR GB IT LI NL SE**

(56) Entgegenhaltungen:
**EP-A- 0 291 570**
**CH-A- 424 424**
**DE-A- 2 107 419**
**DE-A- 2 331 630**

(73) Patentinhaber: **IMA-Norte Maschinenfabriken Klessmann GmbH & Co.**
**Am Ölbach 19**
**W-4830 Gütersloh 1(DE)**

(72) Erfinder: **Peter, Gerhard**
**Sonnenhügel 5**
**W-4800 Bielefeld 15(DE)**
Erfinder: **Kempkensteffen, Heinz**
**Im grünen Winkel 1**
**W-4835 Rietberg 3(DE)**
Erfinder: **Heid, Rudolf, Dr.**
**Probst-Strasse 11**
**CH-4708 Lutterbach(CH)**

(74) Vertreter: **Patentanwälte Dipl.-Ing. Bodo Thiel-king Dipl.-Ing. Otto Elbertzhagen**
**Gadderbaumer Strasse 20**
**W-4800 Bielefeld 1(DE)**

## Beschreibung

Die Erfindung bezieht sich auf eine Werkzeugmaschine mit einem relativ zu einem Arbeitsraum verfahrbaren Spindelkasten, an dem eine Arbeitsspindel mit einer Werkzeugaufnahme gelagert ist. Weiter ist an dem Spindelkasten ein Werkzeugwechsler mit zwei zueinander diametralen Greiferzangen angeordnet, die achsparallel zur Arbeitsspindel von einer gemeinsamen Schwenkposition in Abstand vor der Stirnebene der Werkzeugaufnahme der Spindel aus getrennt verfahrbar sind. Ferner ist an dem Spindelkasten ein Werkzeugmagazin mit einem von den Greiferzangen in einer Wechselposition anfahrbaren Wechselplatz angeordnet, welches von der Stirnebene der Werkzeugaufnahme der Spindel in Richtung vom Arbeitsraum weg versetzt ist. Dabei sind die Greiferzangen an einer Geradführung gelagert, die um je 180 Grad in der Schwenkposition der Greiferzangen drehbar ist, in deren Schwenkendlagen die Greiferzangen einerseits mit der Arbeitsspindel und andererseits mit dem Magazinwechselplatz koaxial ausgerichtet sind, wobei die beiden Greiferzangen einerseits einen kürzeren Weg zwischen der Schwenkposition sowie einer Übernahmeposition etwa in Höhe der Stirnebene der Werkzeugaufnahme der Spindel und andererseits den längeren Weg zwischen der Schwenkposition sowie der Wechselposition in Höhe des Wechselplatzes am Magazin durch einen mechanischen Antrieb zurücklegen.

Eine solche den Gattungsmerkmalen des Patentanspruchs 1 entsprechende Werkzeugmaschine ist aus der CH-A 424 424 bekannt. So weißt die dortige Werkzeugmaschine auch schon getrennt verfahrbare Greiferzangen in so weit auf als es zum einen die Zurücklegung des kürzeren Weges zwischen der Schwenkposition und der Übernahmeposition an der Werkzeugaufnahme der Arbeitsspindel und zum anderen die Zurücklegung des längeren Weges zwischen der Schwenkposition und der Wechselposition am Magazin betrifft, eine zeitliche Abhängigkeit für die Zurücklegung dieser unterschiedlichen Wege durch die Greiferzangen ist jedoch nicht vorgegeben. So kann sich für eine der beiden Greiferzangen, welche die Schwenkposition beim Wechselvorgang bereits erreicht hat, eine Wartezeit dadurch ergeben, daß die zweite Greiferzange ihr Arbeitsspiel zwischen dem Wechselplatz am Magazin und der Schwenkposition oder zwischen der Übernahmeposition an der Werkzeugaufnahme der Arbeitsspindel und der Wechselposition noch nicht beendet hat. Solche Wartezeiten verzögern den gesamten Werkzeugwechselvorgang, der sich zwischen dem Wechselplatz am Magazin und der Übernahmeposition an der Werkzeugaufnahme der Arbeitsspindel abspielt. Außerdem können sich zeitliche Verschiebungen für die Parkpositionen ergeben, welche die Greiferzangen einerseits am Wechselplatz des Magazins und andererseits an der Werkzeugaufnahme der Arbeitsspindel einnehmen. Dadurch kann sich zumindest für eine der beiden Greiferzangen die Bereitschaftszeit verkürzen, die für die Übernahme bzw. die Übergabe des Werkzeugs zur Verfügung steht. Schließlich sind bei der bekannten Werkzeugmaschine für die Mitnahme der Greiferzangen entlang der Förderwege auf Gewindespindeln gelagerte Laufmuttern vorgesehen, ein solcher Antrieb ist für die Erzielung hoher Transportgeschwindigkeiten der Greiferzangen und damit zur Erlangung kürzerer Wechselzeiten nicht geeignet.

Der Erfindung liegt deshalb die Aufgabe zugrunde, eine Werkzeugmaschine der gattungsgemäßen Art zu schaffen, mit deren Werkzeugwechselvorrichtung schnellere Wechselzeiten ohne Wartezeiten für die Greiferzangen während des Bewegungsvorganges möglich sind und die einen zuverlässigen, einfach aufgebauten und für hohe Geschwindigkeiten geeigneten Antrieb der Werkzeugwechselvorrichtung aufweist.

Zur Lösung dieser Aufgabe ist bei einer Werkzeugmaschine der gattungsbildenden Art die Werkzeugwechselvorrichtung nach der Erfindung derart ausgebildet, daß der mechanische Antrieb die Greiferzangen zwangsweise zeitgleich bewegt und sich folglich die Greiferzangen gleichzeitig entweder in der Schwenkposition oder in der Übernahme- sowie der Wechselposition befinden, wobei sie mit über ein Zahnradgetriebe angetriebenen Kurbeln gekuppelt sind, die unterschiedliche Hübe und verschiedene Übersetzungen bezogen auf den gemeinsamen Antrieb aufweisen.

Der besondere Vorteil einer Werkzeugmaschine nach der Erfindung liegt darin, daß sich die beiden Greiferzangen der Werkzeugwechselvorrichtung gleichzeitig in einer Parkposition einerseits am Wechselplatz des Magazins und andererseits an der Werkzeugaufnahme der Arbeitsspindel befinden, womit eine sofortige Werkzeugübernahme bzw. -übergabe möglich ist. Da die verschieden langen Wege zwischen der Übernahmeposition und der Schwenkposition einerseits sowie zwischen der Wechselposition und der Schwenkposition andererseits von den Greiferzangen in gleichen Zeiten zurückgelegt werden, entfallen während des Bewegungsablaufes Wartezeiten der einen Greiferzange gegenüber der anderen. Das gilt insbesondere für diejenige Greiferzange, die den Verfahrweg für den Ein- und Aushub der Werkzeuge an der Werkzeugaufnahme der Arbeitsspindel zurücklegt, für den in der Regel die Höhe des Spannkegels der Werkzeuge maßgeblich ist, während sich die Länge des Verfahrweges der Greiferzangen zwischen der Schwenkposition und der Wechselposition nach der Länge der im Werkzeugmagazin gespeicherten Werkzeuge richten muß, die bei dem am Spindelkasten mitfahrend angeordneten Magazin zwar möglichst mit geringem Abstand zur Werkzeugaufnahme der Arbeitsspindel bereit gehalten werden sollen, jedoch nicht in den Arbeitsraum der Maschine hineinragen dürfen.

In vorteilhafter Ausgestaltung wird die Verfahrbarkeit der beiden Greiferzangen über den kürzeren Weg zwischen der Übernahmeposition und der Schwenkposition dadurch erzielt, daß die Geradführung in Richtung ihrer Längsachse verschieblich und mit der Kurbel mit dem kürzeren Hub gekuppelt ist. Hierbei ist die koaxial mit der Arbeitsspindel ausgerichtete Greiferzange mit der Geradführung axial fest verbunden. Dagegen ist die auf den Magazinwechselplatz ausgerichtete Greiferzange in Achsrichtung lose an der Geradführung angeordnet und mit der Kurbel mit dem längeren Hub gekuppelt.

Weiter vorteilhaft ist das Zahnradgetriebe als Exzentergetriebe mit unterschiedlichen Übersetzungen der Exzenterbolzen und Kurbeln ausgestaltet, wobei die Exzenterbolzen mit synchron angetriebenen Wellenkörpern verbunden sind, um den zeitgleichen Bewegungsablauf sicherzustellen.

Von besonderem Vorteil ist es, wenn sich die Hübe der Exzenterbolzen mit der zweifachen Wirklänge der Kurbeln jeweils zu einem Gesamthub addieren. Dazu sind auf den Exzenterbolzen mit den Kurbeln drehfeste Zahnräder gelagert, die sich unmittelbar oder mittelbar an gestellfesten Zahnrädern abwälzen, womit eine gleichzeitige Verschwenkung der Kurbeln um die Achse der Exzenterbolzen erzwungen wird. Zweckmäßig richtet man die Übersetzungen der betreffenden Zahnräder derart ein, daß bei einer Drehung der Wellenkörper um 180 Grad sich die Kurbeln um den jeweiligen Exzenterbolzen ebenfalls um 180 Grad schwenken.

Weiter vorteilhaft weisen nach der Erfindung die beiden Greiferzangen je eine Spannvorrichtung auf, die von einem gemeinsamen Antrieb gleichzeitig betätigt werden. Dazu haben die Spannvorrichtungen der Greiferzangen jeweils ein zur Geradführung achsparalleles Kupplungsrad und sind achsparallel sowie diametral zur Geradführung zwei Betätigungsstangen mit je einer endseitigen Gegenkupplung angeordnet. Die Lage dieser Kupplungsteile und insbesondere die Länge der Betätigungsstangen ist so gewählt, daß das Kupplungsrad der Spannvorrichtung der einen Greiferzange in der Übernahmeposition mit der längeren Betätigungsstange und das Kupplungsrad der Spannvorrichtung der zweiten Greiferzange, die sich in der Wechselposition befindet, mit der kürzeren Betätigungsstange in Eingriff steht. Dabei versteht sich, daß der Antrieb der beiden Betätigungsstangen von derjenigen Seite aus erfolgt, die von der Werkzeugaufnahme der Spindel bzw. vom Wechselplatz des Magazins abliegt.

Weitere vorteilhafte Ausgestaltungsmerkmale der Erfindung ergeben sich aus den Unteransprüchen und aus der nachstehenden Beschreibung.

Nachfolgend wird die Erfindung anhand der Zeichnung an einem Ausführungsbeispiel noch näher erläutert. Dabei zeigen:

Fig. 1    eine schematische Seitansicht einer Werkzeugmaschine mit vertikaler Arbeitsspindel, einem am Spindelkasten mitfahrend angeordnetem Werkzeugmagazin und einem Werkzeugwechsler

Fig. 2    eine teilgeschnittene Darstellung des Zahnrad-Exzentergetriebes zum Antrieb der beiden Greiferzangen des Werkzeugwechslers der Maschine nach Fig. 1,

Fig. 3    schematische Darstellungen des Zahnrad-Exzentergetriebes nach Fig. 2 in verschiedenen Positionen,

Fig. 4    eine teilgeschnittene Darstellung der Führungseinrichtung der beiden Greiferzangen des Werkzeugwechslers in einer zur Fig. 2 etwa senkrechten Ebene,

Fig. 5    einen Schnitt durch die Führungsvorrichtung nach Fig. 4 entlang der Linie V-V und

Fig. 6    eine Ansicht der beiden Greiferzangen des Werkzeugwechslers

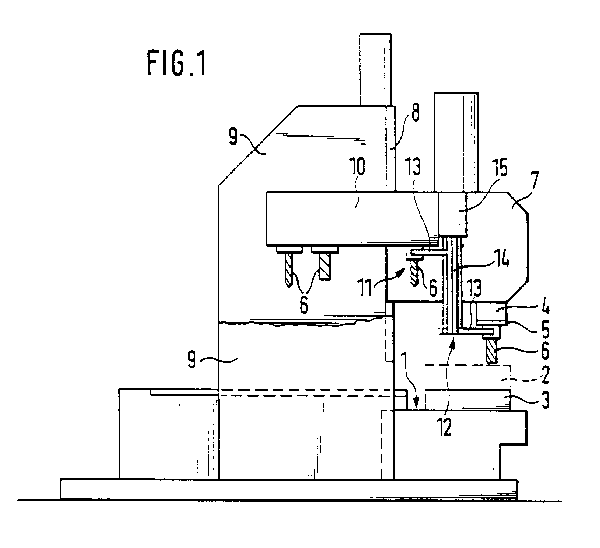

Im einzelnen erkennt man von der in Fig. 1 dargestellten Werkzeugmaschine einen Werkstücktisch 1, auf dem ein Werkstück 2 aufgespannt ist, das beispielsweise von einer Palette 3 getragen wird. Oberhalb des Werkstücktisches 1 ist eine vertikale Arbeitsspindel 4 verfahrbar, wobei insgesamt der Werkstücktisch 1 und die Arbeitsspindel 4 relativ zueinander in drei translatorischen, rechtwinklig zueinander stehenden Achsen bewegbar sind. An ihrem Unterende trägt die Arbeitsspindel 4 eine Werkzeugaufnahme 5, in der ein rotatorisches Schneidwerkzeug 6, wie ein Fräser oder ein Bohrer, eingespannt werden kann. Aufgrund der Verfahrbarkeit der Arbeitsspindel 4 und des Werkstücktisches 1 relativ zueinander kann mit dem in die Werkzeugaufnahme 5 eingespannten Schneidwerkzeug 6 ein Arbeitsraum durchfahren werden, in dem sich das Werkstück 2 während des Bearbeitungsvorganges befinden muß. Die Arbeitsspindel 4 ist an oder in einem Spindelkasten 7 gelagert, der über eine oder mehrere Führungen 8 an einem Ständer 9 höhenverfahrbar ist. Dabei sind die Führungen 8 mit der Achse der Arbeitsspindel 4 in Vertikalrichtung parallel.

Am Spindelkasten 7 ist mitfahrend ein Werkzeugmagazin 10 fest angegliedert, das weitere Schneidwerkzeuge 6 zum Einwechseln in die Werkzeugaufnahme 5 der Arbeitsspindel 4 bereit hält. Von einer in der Zeichnung nicht näher dargestellten Transportvorrichtung können die einzelnen bereit gehaltenen Werkzeuge 6 zu einem Wechselplatz 11 am Magazin 10 befördert werden, an dem sie achsparallel zur Spindel 4 ausgerichtet sind.

Der Austausch der betreffenden Werkzeuge zwischen dem Wechselplatz 11 des Magazins 10 und der Werkzeugaufnahme 5 der Arbeitsspindel 4 erfolgt über einen Werkzeugwechsler 12, welcher zwei diametral zueinander angeordnete Greiferzangen 13 aufweist. Die Greiferzangen 13 sind entlang einer Geradführung 14 nach Art eines Liftes höhenmäßig unabhängig voneinander verfahrbar. Der gesamte Werkzeugwechsler 12 ist um 180 Grad umschlagbar, um jede der beiden Greiferzangen 13 in eine fluchtende Ausrichtung einerseits mit der Arbeitsspindel 4 bzw. deren Werkzeugaufnahme 5 und andererseits mit dem Werkzeugwechselplatz 11 des Magazins 10 bringen zu können.

Zum Verschwenken des Werkzeugwechslers 12 dient eine Antriebsvorrichtung 15, die auf die Geradführung 14 wirkt. Für das Verfahren der beiden Greiferzangen 13 des Werkzeugwechselers 12 ist ein mechanisches Zahnrad-Exzentergetriebe vorgesehen, dessen Einzelheiten nachstehend erläutert werden. Grundsätzlich ist die Verwendbarkeit dieses Antriebs nicht auf eine Vertikalspindelmaschine beschränkt, er kann auch bei Horizontalspindelmaschinen zum Einsatz kommen, bei denen die wesentlichen Aggregate im Verhältnis zu einer Vertikalspindelmaschine lediglich um 90 Grad gekippt angeordnet sind.

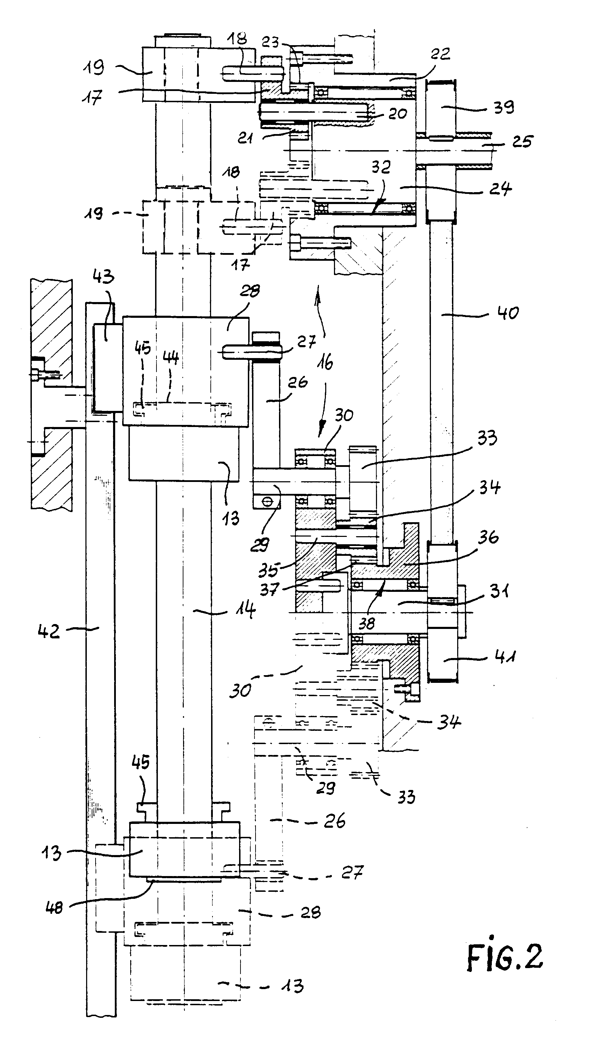

Die Einzelheiten des mechanischen Antriebs der beiden Greiferzangen 13 erkennt man in Fig. 2. In den ausgezogenen Linien sind die beiden Greiferzangen 13 jeweils in ihrer oberen Endlage dargestellt. Dabei befindet sich die in Fig. 2 obere Greiferzange 13 in der Wechselposition am Wechselplatz des Werkzeugmagazins, während die in Fig. 2 unten wiedergegebene Greiferzange 13 sich in der Übernahmeposition an der Arbeitsspindel befindet. In gestrichter Darstellung ist die Schwenkposition wiedergegeben, in der beide Greiferzangen 13 auf einer unteren Ebene höhengleich zueinander ausgerichtet sind und in Abstand vor der Stirnebene der Werkzeugaufnahme der Arbeitsspindel angeordnet sind befindet. Der Abstand zwischen den beiden Greiferzangen 13 in der gestrichten Darstellung und der Greiferzange 13 in der unteren Darstellung von Fig. 2 in ausgezogenen Linien ist der kürzere Hub, der zwischen der Schwenkposition und der Übernahmeposition der Greiferzangen 13 überbrückt werden muß. Gleichzeitig muß die jeweils zweite Greiferzange 13 einen wesentlich größeren Hub durchfahren, der dem Abstand zwischen der unteren gestrichten Darstellung der Greiferzangen 13 und der oberen ausgezogen Darstellung der Greiferzange 13 in Fig. 2 entspricht.

Der kürzere Hub zwischen der Schwenkposition und der Übernahmeposition der Greiferzangen 13 wird durch Verschieben der Geradführung 14 erzielt. Die die Geradführung 14 bildende Profilstange weist an ihrem Unterende einen Anschlagflansch 48 auf, an dem die betreffende Greiferzange 13 unter Schwerkrafteinwirkung anliegt. Es kann hier auch ein in beiden Achsrichtungen der Geradführung 14 wirkender Formschluß vorgesehen werden, der insbesondere bei einer Horizontalanordnung erforderlich ist. Im einzelnen ist das Zahnradgetriebe 16 für die Höhenverfahrbarkeit der beiden Greiferzangen 13 wie folgt aufgebaut:

Am Oberende der höhenverschieblichen Geradführung 14 sitzt ein Mitnehmerstück 19, in das ein Mitnehmerbolzen 18 eingreift, der an einer Kurbel 17 senkrecht zur Schwenkebene vorspringend angeordnet ist. Die Kurbel 17 sitzt auf einem Exzenterbolzen 20 und ist drehfest mit einem Zahnrad 21 verbunden, das zusammen mit der Kurbel 17 auf dem Exzenterbolzen 20 gelagert ist. Der Mitnehmerbolzen 18 ist achsparallel zum Exzenterbolzen 20 angeordnet, wobei der Achsabstand zwischen dem Mitnehmerbolzen 18 und dem Exzenterbolzen 20 den Exzenterhub des Exzenterbolzens 20 vergrößert. Das mit dem Mitnehmerbolzen 18 drehfeste Zahnrad 21 wälzt sich an einer Innenverzahnung 23 eines gestellfesten Hohlzahnrades 22 ab, das eine Durchgangsbohrung 32 aufweist, in der ein Wellenkörper 24 gelagert ist. In eine exzentrische Bohrung dieses Wellenkörpers 24 ist der Exzenterbolzen 20 eingelassen, so daß bei Drehung des Wellenkörpers 24 sich das Zahnrad 21, das mit der Kurbel 17 drehfest ist, in der Innenverzahnung 23 des Hohlzahnrades 22 abwälzt. Nach Drehung des Wellenkörpers 24 um 180 Grad wird die zweite in gestrichten Linien dargestellte Endstellung des Mitnehmerbolzens 18 erreicht, wobei sich die Kurbel 17 ebenfalls um 180 Grad um den Exzenterbolzen 20 geschwenkt hat, wodurch insgesamt der Hub des Mitnehmerbolzens 18 sich aus dem Hub des Exzenterbolzens 20 zuzüglich der doppelten Wirklänge der Kurbel 17 ergibt.

Die jeweils auf den Wechselplatz des Werkzeugmagazins ausgerichtete Greiferzange 13 ist entlang der Geradführung 14 verschiebbar und wird dazu jeweils mit einem Schlitten 28 gekuppelt der über Gleit- oder Wälzlager auf der Geradführung 14 verfahrbar ist. Nahe seinem Unterende hat der Schlitten 28 eine in einer Radialebene zur Geradführung 14 liegende Kulisse 44 in Gestalt einer eingeschnittenen Nut, die sich über eine Kreisbogen von weniger als 180 Grad erstreckt. Die Greiferzangen 13 haben jeweils an ihrer Oberseite eine federartig ausgestaltete Klaue 45, die sich jeweils beim Verschwenken beider Greiferzangen 13 in der unteren Schwenkstellung in die Kulisse 44 des Schlittens 28 hineindrehen bzw. daraus freikommen. Auf diese Weise ist immer nur die auf den Wechselplatz des Magazins ausgerichtete Greiferzange 13 mit dem Schlitten 28 gekuppelt.

Der Schlitten 28 macht die Drehung der Geradführung 14 und damit den Schwenk der Greiferzangen 13 nicht mit. Da die höhenverschiebbare Geradführung 14 an ihrem Unterende nicht gegengelagert werden kann, übernimmt der Schlitten 28 noch zusätzlich eine Führungsaufgabe. Er hat dazu einen längsseitigen Führungsansatz 43, der mit einer geraden Führungsleiste 42 korrespondiert, die achsparallel zur Geradführung 14 gestellfest angeordnet ist.

In den Schlitten 28 greift an der dem Führungsansatz 43 gegenüberliegenden Seite ein zweiter Mitnehmerbolzen 27 ein, der an einer zweiten längeren Kurbel 26 senkrecht zur Kurbelebene vorstehend sitzt. Die Kurbel 26 ist drehfest mit einem Exzenterbolzen 29 verbunden, der in einem radial vorstehenden Flansch 30 eines zweiten Wellenkörpers 31 gelagert ist. Drehfest sitzt auf dem Exzenterbolzen 29 ein Zahnrad 33, welches mit einem Zwischenrad 34 kämmt, das mittels eines Achsbolzens 35 ebenfalls am Flansch 30 des Wellenkörpers 31 gelagert ist. Das Zwischenrad 34 steht in Eingriff mit einem gestellfest angeordneten Sonnenrad 36, welches ebenfalls als Hohlrad mit einer Durchgangsbohrung 38 ausgebildet ist, in der der zweite Wellenkörper 31 gelagert ist. Wird der Wellenkörper 31 gedreht, nimmt er über seinen Flansch 30 den Exzenterbolzen 29 mit, wobei zugleich die Kurbel 26 um den Exzenterbolzen 29 um denjenigen Winkel schwenkt, um den sich der Wellenkörper 31 dreht. Dies ergibt sich zwangsweise durch die mittelbare Abwälzung des Zahnrades 33 über das Zwischenrad 34 auf einer Außenverzahnung 37 des Sonnenrades 36.

Nach einer Drehung des Wellenkörpers 31 um 180 Grad ergibt sich die in Fig. 2 in gestrichten Linien wiedergegebene Lage der Zahnräder 33,34 sowie des Exzenterbolzens 29 mit der Kurbel 26. Auch hier setzt sich der Gesamthub des in den Schlitten 28 eingereifenden Mitnehmerbolzens 27 aus der doppelten Wirklänge der Kurbel 26 und dem Exzenterhub des Exzenterbolzens 29 zusammen.

Die beiden Wellenkörper 24 und 31 sind zwangsgekuppelt. Angetrieben werden beide Wellenkörper 24 und 31 über eine Welle 25, die mit dem ersten Wellenkörper 24 drehfest verbunden ist. Auf der Welle 25 sitzt eine erste Zahnscheibe 39, die mit einer zweiten Zahnscheibe 41 fluchtet, die an den zweiten Wellenkörper 31 angeflanscht ist. Über beide Zahnscheiben 39 und 41 ist ein Zahnriemen 40 geführt und der gesamte Zahnriementrieb hat das Übersetzungsverhältnis 1:1, wodurch sich beide Wellenkörper 24 und 31 gleichsinnig um den gleichen Winkelbetrag jeweils drehen. Bei den gegebenen Längenverhältnissen der beiden Kurbeln 17 und 26 sowie der Übersetzungsverhältnisse des gesamten Zahnradgetriebes 16 beträgt das Hubverhältnis der beiden Mitnehmerbolzen 18 und 27 zueinander etwa 14 folglich legt der mit der Kurbel 26 gekuppelte Schlitten 28 in Relation zum Mitmehmerstück 19 der Geradführung 14, das mit der kürzeren Kurbel 17 verbunden ist, in derselben Zeitspanne etwa den vierfachen Weg in Richtung der Achse der Geradführung 14 zurück.

Die Zahnräder 21, 22; 33, 34, 36 sowie die Kurbeln 17 und 26 und die Wellenkörper 24 und 31 liegen mit ihren Rotations- bzw. Schwenkachsen parallel, womit das gesamte Getriebe 16 einfach und platzsparend aufgebaut ist.

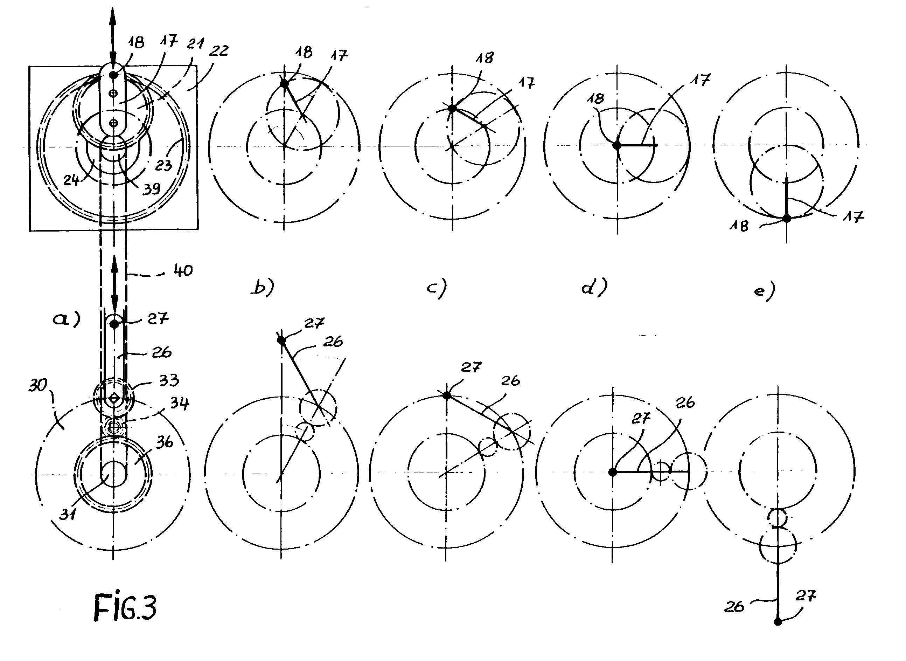

Fig. 3 macht die Kinematik des Zahnradgetriebes 16 deutlich. Allerdings entspricht hier das Hubverhältnis der beiden Mitnehmerbolzen 18 und 27 nicht ganz dem der Darstellung von Fig. 2, jedoch veranschaulicht Fig. 3 besonders, daß die beiden Mitnehmerbolzen 18 und 27 gleichzeitig entlang einer Geraden bewegt werden und ihren Hub jeweils zwischen der oberen und der unteren Endlage in gleicher Zeit zurücklegen. Die Bilder a und e von Fig. 3 geben die obere und die untere Endlage der beiden Mitnehmerbolzen 18 und 27 wieder, während die Bilder b, c and d Zwischenlagen zeigen, aus denen deutlich wird, daß die Schwenkrichtung der beiden Kurbeln 17 und 26 der Umlaufrichtung der beiden Zahnräder 21 und 33, die jeweils mit den Exzenterbolzen 20 und 29 drehfest sind, entgegengesetzt ist. Dadurch werden relativ große Hübe der Mitnehmerbolzen 18 und 27 bei kleinen Getriebeabmessungen erzielt, außerdem ergibt sich jeweils in der Mitte der beiden Hübe der Mitnehmerbolzen 17 und 27 kein Totpunkt.

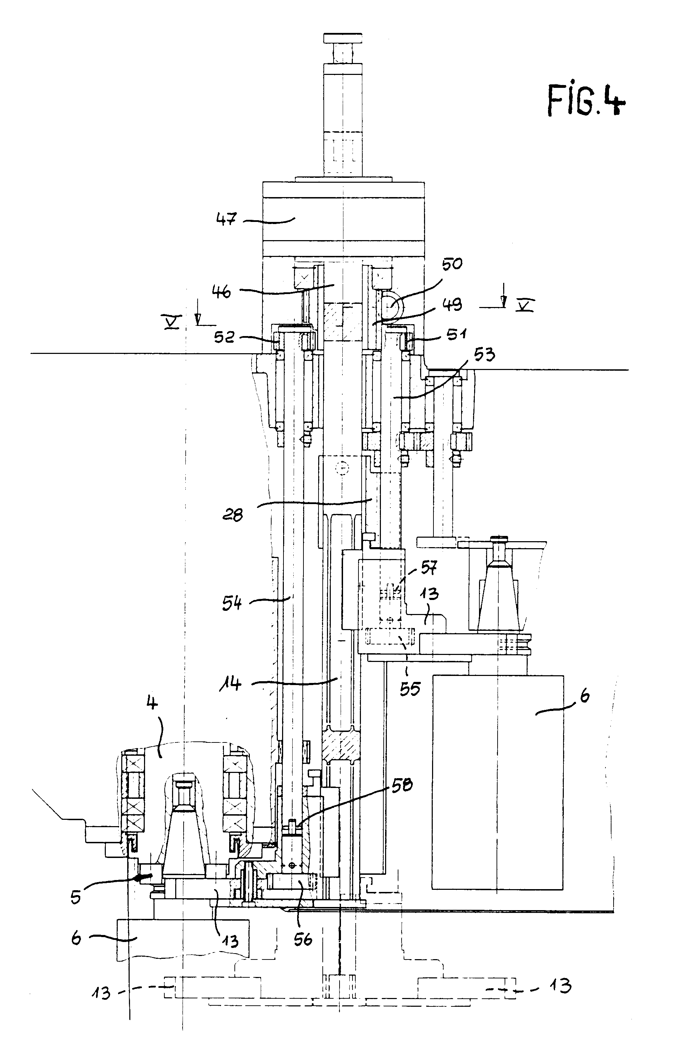

Fig. 4. zeigt weitere Einzelheiten der Führungsvorrichtung für die beiden Greiferzangen 13, die je mit einer im einzelnen nicht dargestellten Spannvorrichtung ausgestattet sind, um die betreffenden Werkzeuge 6 im Bereich eines Mitnehmerbundes spannen oder freigeben zu können. Die in Fig. 4 unten links erkennbare Greiferzange 13 befindet sich in der Übernahmeposition, die sie während des Antriebs des Werkzeugs 6 durch die Arbeitsspindel 4 beibehält, wobei dann die Spannvorrichtung geöffnet ist, um durch die Greiferzange 13 das Werkzeug zur Rotation freizugeben. Gleichzeitig befindet sich die zweite in Fig. 4 rechts oben dargestellte Greiferzange 13 in der Wechselposition am Wechselplatz des Werkzeugmagazins, auch hier kann in gleicher Weise ein Werkzeug 6 von der Greiferzange 13 ergriffen oder freigegeben werden.

Beide Greiferzangen 13 sind in die dritte Ebene ihrer Schwenkposition verfahrbar, die in Fig. 4 durch gestrichte Linien dargestellt ist und in der die Greiferzangen 13 auf gleicher Höhe der Geradführung 14 einander diametral gegenüberliegen. Der Bewegungsablauf ergibt sich durch das anhand der Fig. 2 und 3 erläuterte Getriebe derart, daß zum einen die Geradführung 14 mit der daran in Achsrichtung festen Greiferzange 13 und zum anderen der Schlitten 28 mit der daran in Achsrichtung der Geradführung 14 festen zweiten Greiferzange 13 gleichzeitig die untere Endlage erreichen. In dieser Schwenkstellung wird die Geradführung 14 um 180 Grad um ihre eigene Achse gedreht und die dazu erforderliche Antriebsvorrichtung 15, die schon in der Beschreibung von Fig. 1 erwähnt wurde, umfaßt ein Lagerhaupt 47, in dem der Drehantrieb für die Geradführung 14 untergebracht ist. Gegenüber diesem Lagerhaupt 47 ist die Geradführung axial verschiebbar, und sie ist dazu nach oben hin an einer axialen Verlängerung 46 mit quadratischem Querschnitt angeodnet, die durch das Lagerhaupt 47 hindurchtritt. Relativ zu dieser Verlängerung 46 ist die Geradführung 14, die durch eine Profilstange gebildet wird, längs verschieblich.

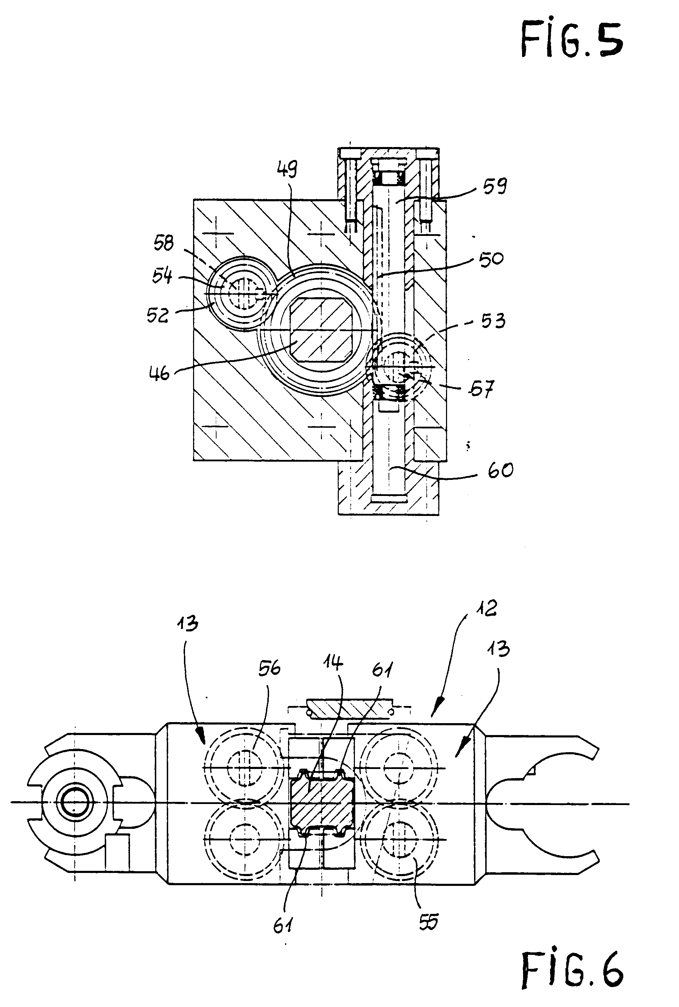

Auf der Verlängerung 46 ist eine Hülse 49 mit einer Außenverzahnung drehbar gelagert, in die eine Zahnstange 50 eingreift, welche in Fig. 5 deutlicher dargestellt ist. Die Außenverzahnung der Hülse 49 kämmt ferner mit zwei diametral dazu liegenden Zahnrädern 51 und 52, welche auf den Oberenden von Betätigungsstangen 53 und 54 angeordnet sind, über welche die Spannvorrichtungen der Greiferzangen 13 geöffnet oder geschlossen werden. Dazu haben die Greiferzangen 13, wie aus den Fig. 4 und 6 ersichtlich ist, Kupplungsräder 55 und 56, die mit Gegenkupplungen 57 und 58 an den Unterenden der Betätigungsstangen 53 und 54 in Eingriff kommen können. Bei der längeren, weiter nach unten reichenden Betätigungsstange 54 ist dies lediglich der Fall, wenn sich die auf die Spindel 4 ausgerichtete Greiferzange 13 in der gegenüber der Schwenkstellung angehobenen Übernahmeposition befindet, während auf der diametral gegenüberliegenden Seite eine Kupplung zwischen dem dortigen Kupplungsrad 55 der betreffenden Greiferzange 13 und der Gegenkupplung 57 der kürzeren Betätigungsstange 53 nur in der Wechselposition der Greiferzange 13 besteht. In allen anderen Positionen sind die Spannvorrichtungen der Greiferzangen 13 geschlossen, um das darin mitgeführte Werkzeug sicher festzuhalten.

Fig. 5 entnimmt man ferner noch, daß die die Betätigungsstangen 53 und 54 über die Hülse 49 antreibende Zahnstange 50 Teil eines Kolbens 59 ist, der in einem Zylinder 60 angeordnet ist. Damit kann die Betätigung der Zahnstange 50 hydraulisch oder pneumatisch erfolgen, wobei ihre translatorische Bewegung in eine rotatorische Bewegung der Hülse 49 umgesetzt wird.

Aus den Fig. 4 und 6 ist ferner noch das Querschnittsprofil der die Stange bildenden Geradführung 14 ersichtlich, die nach Art einer Vielkeilwelle ausgebildet ist, um die Drehmitnahme der beiden Greiferzangen 13 zu bewirken. Beim Ausführungsbeispiel handelt es sich dabei um ein im wesentlichen quadratisches Querschnittsprofil der Geradführung 14 an dessen parallel zur Längsachse durch die beiden Zangen 13 liegenden Seite zusätzliche Längsführungsrippen 61 angeformt sind, um beim Umschlag der Greiferzangen 13 auftretende Radialkräfte abzuleiten.

## Patentansprüche

1. Werkzeugmaschine mit einem relativ zu einem Arbeitsraum verfahrbaren Spindelkasten (7), an dem eine Arbeitsspindel (4) mit einer Werkzeugaufnahme (5), ein Werkzeugwechsler (12) mit zwei zueinander diametralen, achsparallel zur Arbeitsspindel von einer gemeinsamen Schwenkposition in Abstand vor der Stirnebene der Werkzeugaufnahme (5) der Spindel (4) aus getrennt verfahrbaren Greiferzangen (13) und an dem ferner ein von der Stirnebene der Werkzeugaufnahme (5) der Spindel (4) in Richtung vom Arbeitsraum weg versetztes Werkzeugmagazin (10) mit einem von den Greiferzangen (13) in einer Wechselposition anfahrbaren Wechselplatz (11) angeordnet sind, wobei die Greiferzangen (13) an einer Geradführung (14) gelagert sind, die um je 180 Grad in der Schwenkposition der Greiferzangen (13) drehbar ist, in deren Schwenkendlagen die Greiferzangen (13) einerseits mit der Arbeitsspindel (4) und andererseits mit dem Magazinwechselplatz (11) koaxial ausgerichtet sind, und wobei ferner die beiden Greiferzangen (13) einerseits einen kürzeren Weg zwischen der Schwenkposition sowie einer Übernahmeposition etwa in Höhe der Stirnebene der Werkzeugaufnahme (5) der Spindel (4) und andererseits den längeren Weg zwischen der Schwenkposition sowie der Wechselposition in Höhe des Wechselplatzes (11) am Magazin (10) durch einen mechanischen Antrieb zurücklegen,
dadurch gekennzeichnet,
daß der mechanische Antrieb die Greiferzangen (13) zwangsweise zeitgleich bewegt und sich folglich die Greiferzangen (13) gleichzeitig entweder in der Schwenkposition oder in der Übernahme- sowie der Wechselposition befinden, wobei sie mit über ein Zahnradgetriebe (16) angetriebenen Kurbeln (17, 26) gekuppelt sind, die unterschiedliche Hübe und verschiedene Übersetzungen bezogen auf den gemeinsamen Antrieb aufweisen.

2. Werkzeugmaschine nach Anspruch 1,
dadurch gekennzeichnet,
daß die Geradführung (14) in Richtung ihrer Längsachse verschieblich und mit der Kurbel (17) mit dem kürzeren Hub gekuppelt ist, wobei jeweils die koaxial mit der Arbeitsspindel (4) ausgerichtete Greiferzange (13) mit der Geradführung (14) axial fest und die auf den Magazin- Wechselplatz (11) ausgerichtete Greiferzange (13) daran in Achsrichtung lose und mit der Kurbel (26) mit dem längeren Hub gekuppelt ist.

3. Werkzeugmaschine nach Anspruch 1 oder 2,
dadurch gekennzeichnet,
daß die Kurbeln (17,16) an Exzenterbolzen (20,29) gelagert sind, die mit synchron angetriebenen Wellenkörpern (24,31) verbunden und relativ zu deren Achsen exzentrisch angeordnet sind.

4. Werkzeugmaschine nach Anspruch 3,
dadurch gekennzeichnet,
daß auf den Exzenterbolzen (20,29) mit den Kurbeln (17,26) drehfeste Zahnräder (21,33) gelagert sind, die sich unmittelbar oder mittelbar an gestellfesten Zahnrädern (22,36) abwälzen.

5. Werkzeugmaschine nach Anspruch 4,
dadurch gekennzeichnet,
daß die Übersetzungen der Zahnräder (21,22;33,36) derart sind, daß bei einer Drehung der Wellenkörper (24,31) um 180 Grad sich die Kurbeln (17,26) um den jeweiligen Exzenterbolzen (20,29) ebenfalls um 180 Grad schwenken, womit sich die Hübe der Exzenterbolzen (20,29) mit der zweifachen Wirklänge der Kurbeln (17,26) jeweils zu einem Gesamthub addieren.

6. Werkzeugmaschine nach Anspruch 4 oder 5,
dadurch gekennzeichnet,
daß das mit der Kurbel (17) mit dem kürzeren Hub drehfeste Zahnrad (21) mit einer Innenverzahnung (23) des gestellfesten Gegenrades (22) kämmt, das eine zentrale Durchgangsbohrung (32) hat, in welcher der zugehörige Wellenkörper (24) gelagert ist.

7. Werkzeugmaschine nach einem der Ansprüche 4 - 6,
dadurch gekennzeichnet,
daß das mit der Kurbel (26) mit dem längeren Hub drehfeste Zahnrad (33) mit einem Zwischenrad (34) kämmt, das an einem mit dem zugehörigen Wellenkörper (31) drehfesten Flansch (30) gelagert ist, und in ein gestellfestes Sonnenrad (36) eingreift, das eine zentrale Durchgangsbohrung (38) hat, in der der Wellenkörper (31) gelagert ist.

8. Werkzeugmaschine nach Anspruch 6 oder 7,
dadurch gekennzeichnet,
daß die Zahnräder (21,22;33,34,36) und die Wellenkörper (24,31) beider Kurbeln (17,26) achsparallel miteinander sind und die Wellenkörper (24,31) an ihren von den Zahnrädern abliegenden Seiten mittels Zahnscheiben (39,41) sowie einem darüber geführten Zahnriemen (40) miteinander gekuppelt sind.

9. Werkzeugmaschine nach einem der Ansprüche 2 - 8,
dadurch gekennzeichnet,
daß an den Enden der Kurbeln (17,26) Mitnehmerbolzen (18,27) angeordnet sind, die zum einen in ein mit der Geradführung (14) axial festes Mitnehmerstück (19) und zum anderen in ein auf der Geradführung (14) verschieblichen Schlitten (28) mit einer Mitnehmerkulisse (44) für die Greiferzangen (13) eingreifen.

10. Werkzeugmaschine nach Anspruch 9,
dadurch gekennzeichnet,
daß der Schlitten (28) an einer zur Geradführung (14) parallelen, gestellfesten Führungsleiste (42) gelagert und die Kulisse (44) in Umfangsrichtung über einen Bogen von weniger als 180 Grad verlaufend am Schlitten (28) angeordnet ist, wobei an den Grei ferzangen (13) mit dieser Kulisse (44) formschlüssige Klauen (45) vorhanden sind, die bei Ausrichtung der jeweiligen Greiferzange (13) axial fluchtend mit der Arbeitsspindel (4) außer Eingriff mit der Kulisse (44) des Schlittens (28) sind.

11. Werkzeugmaschine nach Anspruch 10,
dadurch gekennzeichnet,
daß an der Geradführung (14) in demjenigen Bereich, der in der Schwenkposition der Kulisse (44) des Schlittens (28) diametral gegenüberliegt, ein mit den Klauen (45) der Greiferzangen (13) zusammenwirkendes Mitnehmerelement angeordnet ist.

12. Werkzeugmaschine nach einem der Ansprüche 1 - 11,
dadurch gekennzeichnet,
daß die Greiferzangen (13) je eine Spannvorrichtung mit einem zur Geradführung (14) achsparallelen Kupplungsrad (55,56) haben, und achsparallel sowie diametral zur Geradführung (14) zwei Betätigungsstangen (53,54) mit je einer endseitigen Gegenkupplung (57,58) gelagert sind, von denen die eine mit dem Kupplungsrad (56) der einen Greiferzange (13) in der Übernahmeposition und die zweite mit dem Kupp lungsrad (55) der anderen Greiferzange (13) in der Wechselposition in Eingriff steht.

13. Werkzeugmaschine nach Anspruch 12,
dadurch gekennzeichnet,
daß die Betätigungsstangen (53,54) an ihren den Gegenkupplungen (57,58) abgewandten Enden je ein Antriebszahnrad (51,52) haben, das in Eingriff mit einer auf einer axialen Verlängerung (46) der Geradführung (14) gelagerten Drehhülse (49) mit einer Außenverzahnung steht, in welche eine Zahnstange (50) eingreift.

14. Werkzeugmaschine nach einem der Ansprüche 2 - 13,
dadurch gekennzeichnet,
daß die Geradführung (14) aus einer nach Art einer Vielkeilwelle profilierten Stange besteht, die in einem Lagerhaupt (47) in Axialrichtung lose geführt und in Drehrichtung fest mit einem Schwenkantrieb verbunden ist.

15. Werkzeugmaschine nach Anspruch 14,
dadurch gekennzeichnet,
daß die Geradführung (14) an dem Lagerhaupt (47) vorkragend angeordnet und zusätzlich über den auf ihr verschieblichen Schlitten (28) an der gestellfesten Führungsleiste (42) geführt ist.

## Claims

1. Machine tool with a headstock (7) which is movable relative to a work chamber and which supports a work spindle (4) with tool block (5), a tool changer (12) with two diametrically opposite tongs (13) which can move separately axially parallel to the work spindle out from a common swivel position at a distance in front of the end plane of the tool block (5) of the spindle (4), and which furthermore supports a tool magazine (10) which is off-set from the end plane of the tool block (5) of the spindle in the direction of the work chamber and has a changing station (11) which can be moved by the tongs (13) in a change position wherein the tongs (13) are mounted on a guide (14) which is rotatable by 180° in each swivel position of the tongs (13) wherein in the swivel end positions the tongs (13) are aligned coaxially on one side with the work spindle (4) and on the other with the magazine changing station (11), and wherein furthermore the two tongs (13) on the one side cover a shorter path between the swivel position and transfer position roughly level with the end plane of the tool block (5) of the spindle (4) and on the other side the longer path between the swivel position and change position level with the changing station (11) on the magazine (10) through a mechanical drive, characterised in that the mechanical drive automatically moves the tongs (13) in synchronization and consequently the tongs (13) are located simultaneously either in the swivel position or in the transfer and change position wherein they are coupled to cranks (17,26) which are driven by a toothed gear (16) and which have different strokes and various transmissions in relation to the common drive.

2. Machine tool according to claim 1 characterised in that the guide (14) is displaceable in the direction of its longitudinal axis and is coupled to the crank (17) with the shorter stroke wherein the tongs (13) aligned coaxially with the work spindle (4) are coupled axially fixed to the guide (14) and the tongs (13) aligned with the magazine changing station (11) are free in the axial direction and are coupled to the crank (26) with the longer stroke.

3. Machine tool according to claim 1 or 2 characterised in that the cranks (17,16) are mounted on eccentric bolts (20,29) which are connected to synchronously driven shaft bodies (24,31) and are mounted eccentric relative to their axes.

4. Machine tool according to claim 3 characterised in that gear wheels (21,33) are mounted on the eccentric bolts (20,29) rotationally secured with the cranks (17,26) and roll directly or indirectly on gear wheels (22,36) fixed on the frame.

5. Machine tool according to claim 4 characterised in that the transmissions of the gear wheels (21,22;33,36) are such that when the shaft bodies (24,31) turn 180 degrees the cranks (17,26) likewise swivel 180 degrees about each eccentric bolt (20,29) whereby the strokes of the eccentric bolt (20,29) each add up with double the active length of the cranks (17,26) into a complete stroke.

6. Machine tool according to claim 4 or 5 characterised in that the gear wheel (21) rotationally secured to the crank (17) with the shorter stroke meshes with an inner gearing (23) of the counter wheel (22) which is fixed on the frame and which has a central through bore (32) in which the associated shaft body (24) is mounted.

7. Machine tool according to one of claims 4 - 6 characterised in that the gearwheel (33) rotationally secured with the crank (26) with the longer stroke meshes with an intermediate wheel (34) which is mounted on a flange (30) which is rotationally secured with the associated shaft body (31), and engages in a sun wheel (36) fixed on the frame and provided with a central through bore (38) in which the shaft body (31) is mounted.

8. Machine tool according to claim 6 or 7 characterised in that the gear wheels (21,22;33,34,36) and the shaft bodies (24,31) of the two cranks (17,26) are axially parallel with each other and the shaft bodies (24,31) are coupled together on their sides remote from the gearwheels by means of toothed discs (39,41) and a toothed belt (40) guided thereon.

9. Machine tool according to one of claims 2 - 8 characterised in that entrainment bolts (18,27) are mounted at the ends of the cranks (17,26) and on the one hand engage in an entrainment member (19) axially fixed with the straight guide (14) and on the other hand engage in a slide (28) which is displaceable on the guide (14) and has an entrainment slot (44) for the tongs (13).

10. Machine tool according to claim 9 characterised in that the slide (28) is mounted on a guide strip (42) which is fixed on the frame parallel to the guide (14), and the slot (44) is mounted on the slide (28) running in the circumferential direction over an arc of less than 180 degrees wherein the tongs (13) are provided with claws (45) which positively engage with the slot (44) and which come out of engagement with the slot (44) of the slide (28) when each tong (13) is axially aligned flush with the work spindle (4).

11. Machine tool according to claim 10 characterised in that an entrainment element interacting with the claws (45) of the tongs (13) is mounted on the guide (14) in the area which in the swivel position is diametrically opposite the slot (44) of the slide (28).

12. Machine tool according to one of claims 1 - 11 characterised in that the tongs (13) each have a tension device with a coupling wheel (55,56) axially parallel to the guide (14), and two operating rods (53,54) each with an end-side counter coupling (57,58) are mounted axially parallel and diametrically opposite the guide (14) wherein one of the counter couplings engages with the coupling wheel (56) of one tong (13) in the transfer position and the other engages with the coupling wheel (55) of the other tong (13) in the change position.

13. Machine tool according to claim 12 characterised in that the operating rods (53,54) each have at their ends remote from the counter couplings (57,58) a drive gearwheel (51,52) which stands in engagement with a rotary sleeve (49) which is mounted on an axial extension (46) of the guide (14) and has external gearing which is engaged by a toothed rod (50).

14. Machine tool according to one of claims 2 - 13 characterised in that the guide (14) consists of a rod which is profiled in the manner of a multi-wedge shaft and which is guided loose in the axial direction in a bearing head (47) but connected secured in the rotary direction to a swivel drive.

15. Machine tool according to claim 14, characterised in that the guide (14) is mounted as a front flange on the bearing head (47) and in addition is guided by the slide (28) displaceable thereon on the guide strip (42) secured on the frame.

**Revendications**

1. Machine-outil avec une poupée (7), mobile par rapport à l'espace de travail, sur laquelle sont disposés une broche motrice (4) équipée d'un raccordement d'outils (5), un changeur d'outils (12), pourvu de deux pinces à griffes (13), diamétralement dirigées l'une vers l'autre, axialement parallèles à la broche motrice (4), déplaçables séparément à partir d'une position de pivotement commune, à intervalle, devant le niveau frontal du raccordement d'outil (5) de la broche (4), ainsi que d'un magasin (10) décalable du niveau frontal du raccordement d'outil (5) en direction de l'espace de travail, avec une place de changement (11) accessible aux pinces à griffes (13) dans une position de changement, les pinces à griffes (13) étant montées sur un guidage droit (14, pivotant respectivement de 180 degrés dans la position pivotée des pinces à griffes (13) et dans les positons finales de pivotement duquel les pinces à griffes (13) sont alignées coaxialement avec la broche motrice (4), d'une part, et, d'autre part, avec la place de changement de magasin (11), et les deux pinces à griffes (13) couvrant, par entraînement mécanique, d'une part, le parcours le plus court entre la position de pivotement et une position de prise en charge approximativement à la hauteur du niveau frontal du raccordement d'outil (5) de la broche motrice (4) et, d'autre part, le parcours le plus long entre la position de pivotement et la position de changement à hauteur de la place de changement (11) au magasin (10), caractérisée par le fait que l'entraînement mécanique meut de force, isochroniquement les pinces à griffes (13) et que, de ce fait, les pinces à griffes (13) se trouve simultanément soit en position de pivotement soit en position de prise en charge ainsi que de changement, étant accouplées avec des manivelle (17, 26), entraînées à l'aide d'un engrenage (16), ces manivelles présentant des courses et des transmissions différentes en ce qui concerne l'entraînement commun.

2. Machine-outil selon revendication 1,
caractérisée par le fait
que le guidage droit (14) est déplaçable dans le sens de son axe longitudinal et est accouplé avec la manivelle (17) à la course la plus courte, la pince à griffe (13) respective, alignée coaxialement avec la broche motrice (4) étant couplée fixement dans le sens axial avec le guidage droit (14), tandis que la pinces à griffes (13) alignée sur la place de changement de magasin (11), y est rattachée axialement, amovible, et couplée avec la manivelle (26) à la course la plus longue.

3. Machine-outil selon revendication 1 ou 2,
caractérisée par le fait
que les manivelles (17, 26) sont montées à des boulons d'excentrique (20, 29), qui sont reliés à des abres (24, 31) à entraînement synchrone et disposés relativement excentriquement par rapport aux axes de ceux-ci.

4. Machine-outil selon revendication 3,
caractérisée par le fait
que des roues dentées (21, 33), tournant solidairement avec les manivelles (17, 26), sont montées sur les boulons d'excentrique (20, 29) et roulent, directement ou indirectement, sur des roues dentées (22, 36) fixées au bâti.

5. Machine-outil selon revendication 4,
caractérisée par le fait
que les transmissions des roues dentées (21, 22; 33, 36) sont telles que, lors d'une rotation du corps de l'arbre (24, 31) de 180 degrés, les manivelles (17, 26) pivotent également de 180 degrés sur le boulon d'excentrique respectif (20, 29), la double longueur active des manivelles (17, 26) venant s'additionner, respectivement, aux courses des boutons à excentique (20, 29).

6. Machine-outil selon revendication 4 ou 5,
caractérisée par le fait
que la roue dentée (21) tournant solidairement avec la manivelle (17) à la course la plus courte concourt avec une denture intérieure (23) de la contre-roue (22), pourvue d'une forure de passage (32), dans laquelle l'arbre afférent (24) est logé.

7. Machine-outil selon l'une des revendications 4 à 6,
caractérisée par le fait
que la roue dentée (33), tournant solidairement avec la manivelle (26) à la course la plus longue, concourt avec une roue intermédiaire (34), montée à une bride (30), tournant solidairement avec l'arbre y afférent (31) et attaque une roue solaire (36), reliée fixement au bâti et pourvue d'une forure de passage centrale (38), dans laquelle l'arbre (31) est logé.

8. Machine-outil selon revendication 6 ou 7,
caractérisée par le fait
que les roues dentées (21, 22; 33, 34, 36) et les arbres (24, 31) des deux manivelles (17. 26) sont axialement parallèles les unes par rapport aux autres et que les arbres (24, 31) sont accouplés ensemble, du côté opposé aux roues dentées, à l'aide de rondelles à dents (39, 41) ainsi que d'une courroie crantée (40) passant par-dessus.

9. Machine-outil selon l'une des revendications 2 à 8,
caractérisée par le fait
que les extrémités des manivelles (17, 26) sont équipées de boulons d'entraînement (18, 27), attaquant, d'une part, un entraîneur (19), axialement solidaire au guidage droit (14), et, d'autre part, un chariot (28), mobile sur le guidage droit (14) et pourvu d'une coulisse d'entraînement (4) pour les pinces à griffes (13).

10. Machine-outil selon revendication 9,
caractérisée par le fait
que les chariots (28) sont montés à une barre de guidage (42), solidaire du bâti et parallèle au guidage droit 14, et que la coulisse (44) équipe le chariot (28), dans le sens périphérique, sur une courbe de moins de 180 degrés, les pinces (13) étant pourvues de griffes (45) formant un engagement positif avec la coulisse (44), lesquelles sont hors de prise avec la coulisse (44) du chariot (28) et en alignement axial par rapport à la broche motrice (4) lors de l'ajustage de la pince à griffe (13) respective.

11. Machine-outil selon revendication 10, caractérisée par le fait qu'un élément d'entraînement, concourant avec les griffes (45) des pinces (13), équipe le guidage droit (14) dans la zone diamétralement opposée à la coulisse (44) du chariot (28) en position de pivotement.

12. Machine-outil selon l'une des revendications 1 à 11, caractérisée par le fait que les pinces à griffes (13) possèdent chacune un dispositif de serrage avec une roue d'accouplement (55, 56) axialement parallèle au guidage (14), et que, parallèlement dans le sens axial ainsi que diamétralement par rapport au guidage droit (14), deux barres d'actionnement (53, 54) sont montées, chacune avec un contre-accouplement (57, 58) d'extrémité, dont l'une est en prise avec la roue d'accouplement (56) de l'une des pinces à griffes (13) en position de prise en charge et l'autre en prise avec la roue d'accouplement (55) de l'autre pince à griffes (13) en position de changement.

13. Machine-outil selon revendication 12, caractérisée par le fait que les barres d'actionnement (53, 54) sont pourvues, chacune, à leurs extrémités détournées des contre-accouplements (57, 58) d'une roue dentée motrice (51, 52), laquelle est en prise avec une douille rotative (49) à denture externe, montée sur un prolongement axial (46) du guidage droit (14), une barre dentée (50) s'engrenant dans la denture externe.

14. Machine-outil selon l'une des revendications 2 à 13, caractérisée par le fait que le guidage droit (14) consiste en une barre profilée genre arbre cannelé à cales multiples, laquelle est conduite axialement, amovible, dans un palier (47) et est reliée fixement à un entraînement à fraction de tour, dans le sens de rotation.

15. Machine-outil selon revendication 14, caractérisée par le fait que le guidage droit (14) est disposé en saillie par rapport au palier (47) et, de plus, amené à la barre conductrice (42) solidaire du bâti, par l'intermédiaire du chariot se déplaçant sur lui.

FIG.1

FIG.2

Fig.3

FIG.4

# FIG.5

# FIG.6